# EUROPEAN PATENT APPLICATION

(11) **EP 4 268 996 A1**
(43) Date of publication of application: **01.11.2023**
(21) Application number: 22170749.0
(22) Date of filing: 29.04.2022
(51) Int. Cl.: B22F 1/052, B22F 10/34, B33Y 70/00

(54) **POWDER MIXTURES FOR ADDITIVE MANUFACTURE HAVING AN INCREASED DENSITY**

(71) Applicant: EOS GmbH Electro Optical Systems, 82152 Krailling (DE)
(72) Inventor: Heikkinen, Hannu, 21160 Naantali (FI)
(74) Representative: Meissner Bolte Partnerschaft mbB

(57) **Abstract**

The present in invention relates to powder mixtures for use in additive manufacture, which comprise three particle fractions A, B and C with different median particle sizes, wherein the median particle sizes relate to each other as 0.2 to 0.5 / 1 / 1.3 to 2. These powder mixtures have higher apparent density compared to conventional additive manufacture powders and thus allow for faster processing with les defects. The present invention further relates to methods for the preparation of respective powder mixtures, methods and devices for the preparation of three-dimensional objects from such powder mixtures and three-dimensional objects, which have been prepared accordingly, as well as the use of the powder mixtures for reducing the amount of defects in additive manufacturing processes.

## Description

The present invention relates to powder mixtures for use in additive manufacture, which comprise three particle fractions A, B and C with different median particle sizes, wherein the median particle sizes relate to each other as 0.2 to 0.5 / 1 / 1.3 to 2. The present invention further relates to methods for the preparation of respective powder mixtures, methods and devices for the preparation of three-dimensional objects from such powder mixtures and three-dimensional objects, which have been prepared accordingly, as well as the use of the powder mixtures for reducing the number of defects in additive manufacturing processes.

### State of the art

Direct Metal Laser Sintering (DMLS) is a laser-based rapid prototyping and tooling process by means of which net shape parts are fabricated in a single process. Complex parts can be produced directly from 3D-CAD models by layer-wise solidification of metal powder layers in portions of the layer corresponding to the cross-section of the three-dimensional part in the respective layer. This process is described in detail for example in Juha Kotila et al., Steel-based Metal Powder Blend for Direct Metal Laser Sintering Process, Advances in Powder Metallurgy & Particular Materials - 1999, Vol.2 Part 5, p. 87-93 and in T. Syvänen et al., New Innovations in Direct Metal Laser Sintering Process - A Step Forward in Rapid Prototyping and Manufacturing, Laser Materials Processing, Vol. 87, 1999, p. 68 to 76.

A method for producing three-dimensional objects by selective laser sintering or selective laser melting and an apparatus for carrying out this method is disclosed, for example, in EP 1 762 122 A1.

During the processing by layer-wise solidification, a layer of powder material is spread out on a support or previous layer, which has been produced in the process, before in a second step the parts of the layer, which are intended to later produce the object are consolidated. For technical reasons, the respective powders are regularly prepared as powder with a comparatively small particle size distribution, which ensure the necessary processing characteristics for spreading the powder layer. In these powders, the density of the material is significantly less than the density of the material after consolidation as a result of the particle form. Thus, the consolidation regularly reduces the thickness of the layer upon consolidation.

In the powder layer, the volume, which is not occupied by the particle is regularly filled with gas such as surrounding air, or, if the processing is under inert gas, under the respective gas. Upon melting, this gas is usually vented into the atmosphere but in occasions can become trapped in the layer in the form of bubbles and defects, which reduce the density of the thus prepared object and may compromise the desired mechanical properties thereof. Accordingly, there is a need for a method of processing of powders by additive manufacture, which minimizes and reduces the number of defects resulting from gas, which is entrapped in the object during its preparation. Also, the gas leads to a loss of energy on melting, as some heat is absorbed by the gas, which leads to a loss in productivity.

In addition, defects may also occur due to inhomogeneous melting which results from an irradiation in the consolidation step. Here, the problem is that in while there is a homogeneous spread of material from a macroscopic perspective, the amount of material on the microscopic level may differ significantly. E.g., when the thickness of a further layer which is applied is 60 µm, which are stacked on one another the whole of the 60 µm can be occupied by two particles of 30 µm thickness or one particle of 35 µm thickness where the remaining space is filled with gas. In the case the energy/solid volume ratio upon irradiation (with identical power) is significantly different and, correspondingly, sections with less material can be heated to higher temperatures than sections with more material. This in turn leads to differences in the cooling and solidification behaviour, which may lead to different resulting characteristics in the µm-scale.

While these problems are regularly addressed by adjustment of the processing conditions, there is as of yet no way to fully avoid these problems.

An obvious means to circumvent the above indicated problems would be to increase the density of the powder as this would decrease the amount of gas in each layer prior to consolidation and increase the homogeneity of the amount of material in the µm-scale.

A method to enable an increase of the bulk density of powders for use in additive manufacturing and other processes is described in WO 2015/073081. According to this document, sizes and ratios of two or more primary powders with different average particle sizes are calculated for an optimal utilisation of space. In an example, WO 2015/073081 e.g. describes a particle powder having a residual gas filed volume of only about 18%, which is obtained by mixing two Ti6-4 highly spherical particle powders with an effective median diameter of about 25 µm and 1 µm in a ratio of 71/29. In this case, WO 2015/ 073081 reports however, that the particles tend to phase separate and that the eventual density is highly dependent on the processing conditions.

In additive manufacturing, the particles to be processed are regularly applied from a container or storage system, where the adjustment of conditions for the optimal density are difficult to realize. In addition, since the powder has to be applied as a layer, the particle mixture also has to have suitable properties in terms of flowability and achievable homogeneity of layers prepared form the powder.

Accordingly, there is a need for an optimized powder which has an increased density relative to conventional powders, but which can practically be used in conventional additive manufacture (AM) processing machines.

The present application addresses these needs.

In the investigations underlying the present invention, it has unexpectedly been found that powders with increased density (relative to conventional powders for e.g. laser sintering) can be obtained by mixing three initial powders which each have a different median particle size and wherein the particle sizes differ by a limited margin from one another. While this mixture is not optimized towards maximum density, the powders provide better processing characteristics than density optimized powder and thus can substitute conventional powders in additive manufacture processing without elaborate modification of the equipment. The increased density nonetheless allows for the use of higher energy input during the melting, which provides for an increase in the productivity.

Accordingly, in a first aspect, the present invention concerns a powder mixture for use in an additive manufacturing process, wherein the powder mixture comprises a particle fraction A with a median particle size α, a particle fraction B with a median particle size β, which is smaller than the median particle size α, and a particle fraction C with a median particle size γ, which is larger than the average particle size α, wherein the median particle sizes of the particle fractions B, A and C relate to each other as 0.2 to 0.5 / 1 / 1.3 to 2. Preferably, the median particle sizes of the particle fractions B, A and C relate to each other as 0.3 to 0.4 / 1 / 1.5 to 1.8 and more preferably median particle sizes relate to each other as about 1/3 / 1 / 5/3.

The "median particle size" of the respective particle fraction is the D50 particle size as determined by laser diffraction according to ISO 13320:2020, where half of the particles (in terms of their volume) are smaller and half are larger than the D50.

The median particle sizes of the respective fractions A, B and C can be determined prior to formation of the mixture by measuring the median particle size of the respective fractions. In the particle mixture, the respective median particle sizes α, β and γ can be determined by calculatory methods from the particle size distribution of the powder mixture. Therein, each of the particle fractions typically has a symmetric particle size distribution (Gaussian form) or an asymmetric particle size distribution (Gaussian form with one side of the distribution being steeper than the other). If such distributions are superimposed as in a distribution spectrum of the particle mixture, the medium particle size of the dominant fraction is apparent as a peak, whereas non-dominant fractions would appear as peaks or shoulders. From this, the respective median particle size of the less dominant fractions can then be determined by simulated overlay of particle size distributions with an assumed equal degree of symmetry.

Accordingly, it is not necessary to know whether a given particle belongs to particle fraction A, B or C, since the determination of the median particle sizes and amounts is based on the sum of all particles and the particle size distribution of the whole powder mixture.

The respective particle fractions in the inventive powder mixture are not limited in terms of the material, from which the fractions are formed, i.e. the respective fractions can be formed from the same or a different material. Even though large differences in the density of the different materials are to be avoided, as such differences can facilitate separation of the respective materials. Preferably, thus, the density of the materials, which provide the respective particle fractions, differs from one another by less than 50%, more preferably by less than 40%, even more preferably by less than 30% and even more preferably by less than 15%. In one embodiment, the respective particle fractions A, B and C are based on essentially the same material, in which case the density of the material, which provides respective particle fractions, is about the same. Here "essentially" means that the composition of the respective fractions can have minor variations, e.g. at most 2 wt.-% difference and preferably at most 1 wt.-% difference of the combined differences in each element in the composition (i.e. a 0.5 wt.-% difference in Fe and a 0.5 wt.-% difference in Ni is a 1wt.-% difference, if all amounts of other elements are the same).

In a particularly preferred embodiment, the respective particle fractions A, B and C are based on the same material, in which case the density of the material, which provides respective particle fractions, is the same except for variation resulting from the processing of the material to powders. The density in the above is the "material density" without any entrapped gas, so that respective particle fractions can still have different bulk densities.

As noted above, the inventive powder mixtures are not optimized for an as high as possible theoretical density of the powder mixture, but are designed to provide an optimal compromise between high density and processability in additive manufacture. Accordingly, the inventive powder mixture has a relative density of at least 50%, more preferably at least 52%, even more preferably at least 54% and even more preferably at least 56%. This compares to a relative density of about 45% for a conventional powder having a particle size distribution in a Gaussian form. On the other hand, the relative density is less than what is theoretically possible with a preferred relative density of 70% or less and more preferably 63% or less.

Here, the "relative density" is the bulk density or apparent density of the powder mixture divided by the skeletal density of the metal powder. Thus, the relative density is an indirect measure of the inter-particle void volume and internal pore volume of the particle mixture, which can be calculated from the relative density via the term (1 - the relative density).

The skeletal density is the ratio of the mass of solid material to the sum of the volumes of the solid material and closed (or blind) pores within the materialas determined by ASTM B 923-21. The apparent or bulk density is determined by an appropriate method, e.g. according to ASTM B212-17, if the solid material is a free flowing material and ASTM B417 or ASTM B329 if the solid material is a non-flowable material. The skilled practitioner can apply the appropriate standard depending on the flow characteristics based on his common general knowledge.

In one embodiment, the particle mixture is a mixture which is based on a metal or metal alloy, such as a steel alloy, nickel alloy, aluminum alloy, titanium alloy or other alloy. If the particle mixture is based on a steel allow, it is preferred that the powder mixture has a relative density of from 4.2 to 5.0 g/cm³, more preferably at least 4.4 g/cm³ and/or 4.9 g/cm³ or less and even more preferably at least 4.6 g/cm³ and/or 4.85 g/cm³ or less. If the particle mixture is based on an aluminum alloy, it is preferred that the powder mixture has a relative density of from 1.35 to 1.9 g/cm³, preferably at least 1.5 g/cm³ and/or 1.8 g/cm³ or less and more preferably at least 1.55 g/cm³ and/or 1.75 g/cm³ or less. If the particle mixture is based on a titanium alloy, it is preferred that the powder mixture has a relative density of from 2.2 to 3.1 g/cm³, more preferably at least 2.4 g/cm³ and/or 2.9 g/cm³ or less and even more preferably at least 2.5 g/cm³ and/or 2.8 g/cm³ or less.

In another embodiment, the particle mixture is based on an organic polymer. If so, it is preferred that the powder mixture has a relative density of from 0.5 to 0.9 g/cm³, more preferably at least 0.55 g/cm³ and/or 0.85 g/cm³ or less and even more preferably at least 0.6 g/cm³ and/or 0.8 g/cm³ or less.

The indication that the "mixture is based" on a certain material here is intended to mean that at least the major volume proportion (i.e. 50 Vol.-% or more) in the particle mixture is provided by this material. Preferably, at least 60 Vol.-% more preferably at least 70 Vol.-% and even more preferably at least 80 Vol.-% of the particle mixture are provided by the material, on which the "mixture is based". In one embodiment, the mixture is based only on this material.

As noted above, the particle mixture can be based on a metal alloy, such as a steel alloy, nickel alloy, aluminum alloy, titanium alloy. Possible steel alloys, which can form the basis of or the full particle mixture include e.g. 316L, 18Ni300, or 17-4PH steel. A possible nickel alloy, which may form the basis or the full particle mixture includes IN 718. A possible titanium alloy, which may form the basis or the full particle mixture includes TiAl6V4.

In a particularly preferred embodiment, the particles in the fractions A, B and C are steel, nickel or aluminium alloy particles and especially steel particles.

As concerns organic polymers, which can be contained in which the powder mixture as a base material or form which the fractions of the powder mixture can be made up, the invention is not subject to any relevant restrictions. Examples of suitable polymers for the purposes of the invention include in particular polymers, co-polymers or polymer blends selected from polyamides, polyolefins, in particular in the form of polyethylene or polypropylene, polystyrene, polyarylether-ketones (PAEK), in particular polyether ketone ketone or poly ether ketone, thermoplastic polyurethanes, polyesters, polyethers, polyhydroxy acids, polylactide, polyphenylene sulfide, polyphenylene oxide, polyimide, polyetherimide, polycarbonate and poly ether block amides (PEBA). Preferably, the polymer powder is formed from one of these polymers. The term "polymers" here also includes oligomers with a cyclic or ring-shaped molecular structure.

Suitable PAEK polymers and copolymers, for example, are selected from the group consisting of polyether ether ketone (PEEK), polyether ketone ketone (PEKK), polyether ketone (PEK), polyether ether ketone ketone (PEEKK), polyether ketone ether ketone ketone (PEKEKK), polyaryletheretheretherketon (PEEEK) and copolymers, which include at least one of the aforementioned polymers.

In one particularly preferred embodiment, the polymer is selected from polyamides, especially in the form of polyamide-5.6, polyamide-5.10, polyamide-6, polyamide-6.6, polyamide-6.13, polyamide-11, polyamide-12, polyamide-10.12 or polyamide 12.12. Even more preferably, the polymer is selected from polyamide-11 and polyamide-12. Another particularly preferred polymer is polypropylene. Yet another particularly preferred polymer is a polyether block amide (PEBA).

If the powder mixture as based on an organic polymer, the powder mixture or the individual fractions thereof may comprise additives which are conventionally used in plastic powders for additive manufacturing processes, such as flowing agents, anti-agglomeration agents, reflection particles and/or pigments. A suitable type of reflection particles comprises for example TiO₂, which can be incorporated into the plastic powder in dry form. A suitable flowing agent and/or anti-agglomeration agent is e.g. carbon black or pyrogenic silica. A particular preferred type of additive, which may be used to impart absorption properties at a wavelength, where polymer materials do not absorb light, are IR or NIR radiation absorbing materials, such as the carbon black types described in WO 2020/099236 A1. Such materials may be present separately in a mixture with the polymer-based particles, absorbed onto the surface of the particles or incorporated into the particles. Moreover, technical polymers typically contain stabilizers (e.g. antioxidants, UV-stabilizers), chain growth limiters and/or other additives for controlling the polymerization reaction (e.g. acidic buffer systems), functional additives (e.g. flame retardants) and/or intended or unintended contaminants from polymerization or powderization processes (e.g. catalysts, compatibilizers, processing aids).

The particle size of the fractions has a strong influence on the roughness of a surface, which is produced from the particle mixture by an additive manufacturing method. E.g., if the respective particle sizes are larger, the production will be faster, but also the roughness of an article produced by the method will be higher. Accordingly, to provide an adequate compromise between production speed and surface roughness, the fraction A preferably has a particle size D50 in the range of 30 µm to 60 µm and preferably at least 35 µm and/or 52 µm or less and more preferably at least 38 µm and/or 48 µm or less. In this case, the particle size is the median particle size as defined above, which is determined by Laser diffraction according to ISO 13320:2020.

The particle fraction B preferably has a particle size D50 in the range of 8 µm to 25 µm and more preferably at least 10 µm and/or 20 µm or less and even more preferably at least 12 µm and/or 17 µm or less. The particle fraction C preferably has a particle size D50 in the range of 50 µm to 100 µm and more preferably at least 58 µm and/or 90 µm or less and even more preferably at least 62 µm and/or 80 µm or less.

In addition to the factual particle size D50, the particle size distribution is also determined by the breadth of the distribution of the respective particle fractions. In the invention, this factor is accounted for by the "distribution width" or "span", which is calculated as (D90 - D10) / D50. In a preferred embodiment, the particle fraction A has a span of from 0.4 to 1 and preferably of from 0.55 or more and/or 0.8 or less. A preferred span for the particle fraction B is from 0.8 to 1.7 and more preferably of from 1.0 or more and/or 1.4 or less. For the particle fraction C, the preferred distribution width is 0.3 to 0.6 and more preferably 0.35 or more and/or 0.5 or less.

To ensure the formation of a substantially homogeneous powder bed when the powder is applied as a flat surface for subsequent processing, it is desirable that the respective particles are substantially spherical, so that wedging between particles, which can facilitate to pore formation is avoided. Accordingly, it is preferred that at least one of the particle fractions A, B and C has a sphericity of at least 0.9, in particular at least 0.93. In a particularly preferred embodiment, all particle fractions A, B and C have a sphericity of at least 0.9 and especially at least 0.93. The sphericity here is the average ratio of the particle diameter determined for the smallest of all maximum chords of the particle projection of the particle x_{c min}/ particle diameter for the longest Feret diameter of all measured Feret diameters of a particle x_{Fe max} according to ISO 13322-2:2021.

Finally, the relative density, which is provided by the powder mixture is also influenced by the ratio of the respective particle fractions. Preferred powder mixtures for use in the present invention thus comprise 10 to 20 parts by weight of the particle fraction, 50 to 70 parts by weight of the particle fraction B and 10 to 40 parts by weight and the particle fraction C, based on the total weight of the mixture.

In a second aspect, the present invention is directed to a method for the preparation of a powder mixture, which preferably is a powder mixture as described above, wherein the method comprises the provision of a particle fraction A with a median particle size α, a particle fraction B with a median particle size β, which is smaller than the median particle size α, and a particle fraction C with a median particle size γ, which is larger than the median particle size α, wherein the particle sizes of the particle fractions B, A and C relate to each other as 0.2 to 0.5: 1: 1.3 to 2, and mixing the particle fractions A, B, and C to provide a powder mixture. Preferably, the particle fractions in the above method have essentially the same composition.

The mixing can be accomplished by any conventional means, by which a powder mixture can be prepared, and most conveniently will be done by dry mixing of the respective particle fractions. These in turn can be prepared by the means, which are usually employed for powder production, e.g. gas and plasma atomization for the production of metal and metal alloy powders or by cryogenic grinding with an optional subsequent rounding treatment.

In a third aspect, the present invention pertains to a method for the manufacture of a three-dimensional object, comprising providing a powder mixture as defined above, wherein preferably the powder mixture is prepared according to the method as described above, and preparing the object by applying the mixture layer on layer and selectively consolidating the mixture, in particular by application of electromagnetic radiation, at positions in each layer, which correspond to the cross section of the object in this layer, wherein the positions are scanned in at least one interaction zone, in particular in a radiation interaction zone of an energy beam bundle.

The energy beam provides sufficient energy to melt the powder mixture in the irradiation area. As the skilled practitioner will appreciate, the irradiation powder is dependent on the material of the powder mixture (more energy is necessary to melt metals or metal alloy than for organic polymers). In most cases, the energy beam will be an electron beam or a beam of electromagnetic radiation. In a particularly preferred embodiment, the beam of electromagnetic radiation is provided by a laser, which can readily provide the required power amounts. If less power is required, as is the case for processing of polymer powders, also a diode laser, an array of diode lasers or a surface emitter (VCSEL or Philips-VCSEL) could be used as the energy source or source, which emits the energy beam.

As noted above, the thickness, by which the layers are applied, has an impact on the surface roughness of a three-dimensional object, which is prepared. Thus, the thickness of the layers is conventionally adjusted to provide a compromise between production speed and surface roughness. Accordingly, in a preferred embodiment, the respective individual layers are applied at a thickness of 10 µm or more, in particular 20 µm or more and more preferably 30 µm or more. To ensure that the roughness is not excessive and a substantially uniform melting (which may be compromised if the layer to be molten becomes thicker), the thickness of the layers is preferably 100 µm or less, more preferably 80 µm or less and even more preferably 60 µm or less.

The method is preferably performed with a volume rate in the range of 5 to 12 and more preferably of at least 6.5 and/or 10.5 or less and even more preferably 9.8 or less.

Suitable methods for the processing of the powder mixture in the above indicated include, without being limited thereto, direct metal laser sintering (DMLS) and direct metal laser melting (DMLM) for metal or metal alloy based powder mixtures, and selective laser sintering (SLS), selective laser melting (SLM) for organic polymer based powder mixtures. Yet in addition, organic polymer based three-dimensional object can be prepared by multijet modeling (wherein a liquid, light sensitive plastic material comprising the biodegradability imparting additive as noted above, is applied on a platform by means of a printing head and is cured by means of a radiation source, which is incorporated into the printing head), or other methods which involve the consecutive provision of powder layers as part of the manufacturing.

After the three-dimensional object has been prepared, it can be subjected to conventional processing steps, including a heat treatment for adjusting the mechanical properties of an object, which is prepared from a metal or metal alloy, or a rounding treatment to smoothen the surface of an object such as a grinding, etching or other surface abrasive treatment.

In a fourth aspect, the present invention pertains to a three-dimensional object, which is prepared according to the method as described above, i.e. a method wherein the three-dimensional object is prepared by selective layer-wise solidification of the powder mixture by means of an electromagnetic and/or particle radiation at positions that correspond to a cross-section of the object in a respective layer, wherein the powder mixture is a powder mixture for use in the manufacture of a three-dimensional object by means of an additive manufacturing method, wherein the powder mixture comprises a particle fraction A with a median particle size α, a particle fraction B with a median particle size β, which is smaller than the median particle size α, and a particle fraction C with a median particle size γ, which is larger than the median particle size α, wherein the particle sizes of the particle fractions B, A and C relate to each other as 0.2 to 0.5: 1: 1.3 to 2.

In one embodiment, the three-dimensional object is a three-dimensional object having a defect percentage of 0.050% or less, preferably of 0.020% or less, more preferably of 0.015% or less and even more preferably of 0.010% or less.

In a fifth aspect, the present invention pertains to a use of a powder mixture as defined above for reducing the number of defects in a three-dimensional object, which is prepared from the powder mixture by an additive manufacturing process. "Defects" here include pores which result from trapped environmental gas or fusion defects of badly melted areas, as assessed by image analysis of cross cut-surfaces of an object. For the purpose of this invention, the number of defects is indicated as % of the "defective"-area relative to the complete area investigated.

In a sixth aspect, the present invention is directed to a device for implementing a method for the production of a three-dimensional object as described above, wherein the device comprises an irradiation unit emitting electromagnetic or particle irradiation, preferably a laser sintering or laser melting device 20, a process chamber having 3 an open container 5 with a container wall 6, a support 10, which is inside the process chamber 3, wherein open container 5 and support 10 are moveable against each other in vertical direction, a storage container 14 and a recoater 16, which is moveable in horizontal direction, and wherein the storage container 14 is at least partially filled with a powder mixture as defined above.

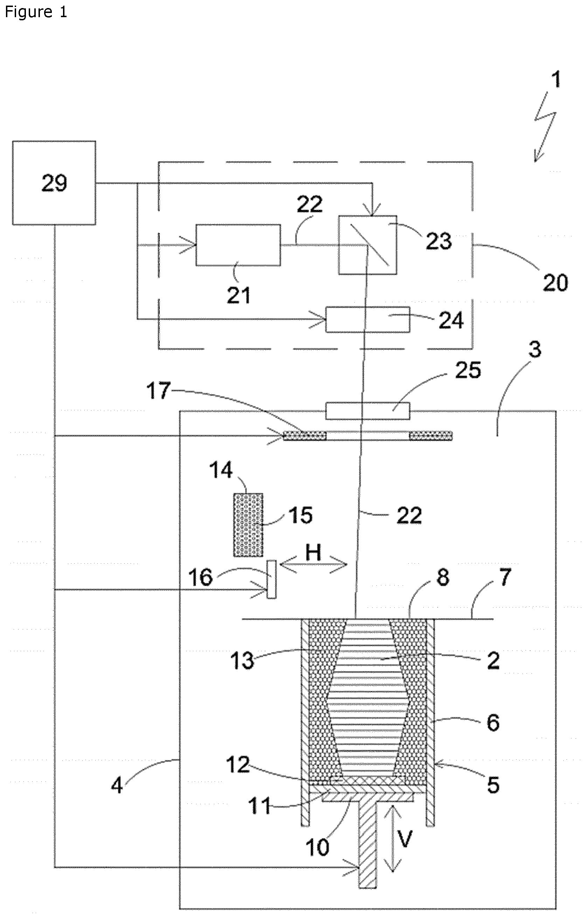

Other features and embodiments of the invention are provided in the following description of an exemplary embodiment taking account of the appended Figure 1.

The device represented in Figure 1 is a laser sintering or laser melting apparatus 1 for the manufacture of a three-dimensional object 2. The apparatus 1 contains a process chamber 3 having a chamber wall 4. A container 5 being open at the top and having a container wall 6 is arranged in the process chamber 3. The opening at the top of the container 5 defines a working plane 7. The portion of the working plane 7 lying within the opening of the container 5, which can be used for building up the object 2, is referred to as building area 8. Arranged in the container 5, there is a support 10, which can be moved in a vertical direction V, and on which a base plate 11 which closes the container 5 toward the bottom and therefore forms the base of the container 5 is attached. The base plate 11 may be a plate which is formed separately from the support 10 and is fastened on the support 10, or may be formed so as to be integral with the support 10. A building platform 12 on which the object 2 is built may also be attached to the base plate 11. However, the object 2 may also be built on the base plate 11, which then itself serves as the building platform.

In Figure 1, the object 2 to be manufactured is shown in an intermediate state. It consists of a plurality of solidified layers and is surrounded by building material 13 which remains unsolidified. The apparatus 1 furthermore contains a storage container 14 for building material 15 in powder form, which can be solidified by electromagnetic radiation, for example a laser, and/or particle radiation, for example an electron beam. The apparatus 1 also comprises a recoater 16, which is movable in a horizontal direction H, for applying layers of building material 15 within the building area 8. Optionally, a radiation heater 17 for heating the applied building material 15, e.g. an infrared heater, may be arranged in the process chamber.

The device in Figure 1 furthermore contains an irradiation device 20 having a laser 21, which generates a laser beam 22 that is deflected by means of a deflecting device 23 and focused onto the working plane 7 by means of a focusing device 24 via an entrance window 25, which is arranged at the top side of the process chamber 3 in the chamber wall 4.

The device in Figure 1 furthermore contains a control unit 29, by means of which the individual component parts of the apparatus 1 are controlled in a coordinated manner for carrying out a method for the manufacture of a three-dimensional object. The control unit 29 may contain a CPU, the operation of which is controlled by a computer program (software). During operation of the apparatus 1, the following steps are repeatedly carried out: For each layer, the support 10 is lowered by a height which preferably corresponds to the desired thickness of the layer of the building material 15. The recoater 16 is moved to the storage container 14, from which it receives an amount of building material 15 that is sufficient for the application of at least one layer. The recoater 16 is then moved over the building area 8 and applies a thin layer of the building material 15 in powder form on the base plate 11 or on the building platform 12 or on a previously applied layer. The layer is applied at least across the cross-section of the object 2, preferably across the entire building area 8. Optionally, the building material 15 is heated to an operation temperature by means of at least one radiation heater 17. The cross-section of the object 2 to be manufactured is then scanned by the laser beam 22 in order to selectively solidify this area of the applied layer. These steps are carried out until the object 2 is completed. The object 2 can then be removed from the container 5.

According to the invention, a powder mixture is used as building material 15. The powder mixture comprises a particle fraction A with a median particle size α, a particle fraction B with a median particle size β, which is smaller than the median particle size α, and a particle fraction C with a median particle size γ, which is larger than the median particle size α, wherein the particle size of the particle fractions B, A and C relate to each other as 0.2 to 0.5 / 1 / 1.3 to 2.

According to the embodiments described below, the powder mixture is e.g. processed by the direct metal laser sintering (DMLS) method, when the powder mixture in based on a metal or metal alloy. In the selective laser sintering or selective laser melting method small portions of a whole volume of powder required for manufacturing an object are heated up simultaneously to a temperature which allows a sintering and/or melting of these portions. This way of manufacturing an object can typically be characterized as a continuous and/or - on a micro-level - frequently gradual process, whereby the object is acquired through a multitude of heating cycles of small powder volumes. Solidification of these small powder portions is carried through selectively, i.e. at selected positions of a powder reservoir, which positions correspond to portions of an object to be manufactured. As in selective laser sintering or selective laser melting the process of solidification is usually carried through layer by layer the solidified powder in each layer is identical with a cross-section of the object that is to be built. Due to the small volume or mass of powder, which is solidified in a given time span, e.g. 1 mm³ per second or less, and due to conditions in a process chamber of such additive manufacturing machines, which can favor a rapid cool-down below a critical temperature, the material normally solidifies quickly after heating.

In conventional sintering and casting methods one and the same portion of building material is heated up to a required temperature at the same time. A whole portion of material required to generate an object is cast into a mould in a liquid form. This volume of building material is therefore held above a temperature level required for melting or sintering for a much longer time compared to the selective laser sintering or selective laser melting method. Large volumes of hot material lead to a low cooling rate and a slow solidification process of the building material after heating. In other words, selective laser sintering or selective laser melting methods can be differentiated from conventional sintering and casting methods by processing of smaller volumes of building material, faster heat cycles and less need for heating up build material with high tolerances for avoiding a premature solidification of the material. These can be counted among the reasons why the amount of energy introduced into the building material for reaching the required temperatures can be controlled more accurately in selective laser sintering or selective laser melting methods. These conditions allow for setting an upper limit of energy input into the powder portions to be processed, which determines a temperature generated in the powder portions, more precisely, that is lower and closer to the melting point of the respective material than in conventional sintering or casting methods.

An object generated from a powder mixture according to the invention may show a change of various mechanical properties, but most notably shows a reduction in defects relative to an object, which is prepared from a conventional AM powder.

In the following the present invention will be further described by means of some examples, which however are not be construed as limiting the invention thereto in any manner.

### Example 1: preparation of a powder mixture according to the present invention

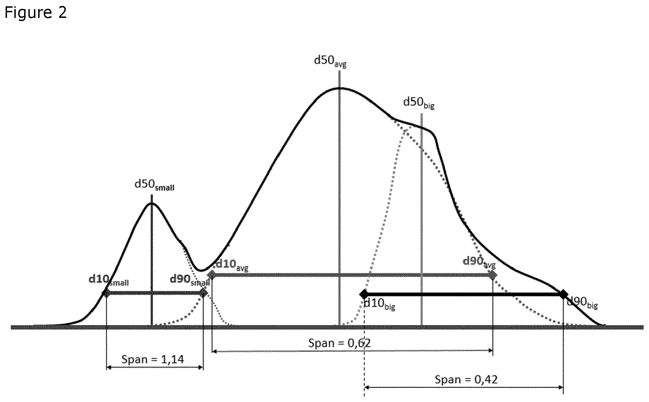

In a mixer, a first particle fraction B of 316 L steel having a D50 of 14.3 µm, a second particle fraction A of 316 L steel having a D50 of 42.6 µm and a third particle fraction C of 316 L steel having a D50 of 70.8 µm is mixed to provide a powder mixture. In this mixture, the first particle fraction had a span of 1.14, the second particle fraction had a span of 0.62 and the third particle fraction had a span of 0.42. The amounts of the respective particle fractions were 15/70/15, respectively. The resulting powder had a relative density of 4.94 g/cm³. The particle size distribution of the resulting powder mixture is shown in figure 2.

In comparison thereto, a conventional 316 L steel powder of a median particle size of about 35 µm had a relative density of 3.9 g/cm³. The inventive powder thus had a relative density which is about 25 % higher than the density of the conventional powder.

The compositions and apparent densities of further inventive powder mixtures are given in the below table 1:

| B [%] | A [%] | C [%] | Apparent density [g/cm³] |
|---|---|---|---|
| 20 | 60 | 20 | 4.92 |
| 10 | 60 | 30 | 4.79 |
| 10 | 50 | 40 | 4.78 |
| 10 | 70 | 21 | 4.94 |
| 20 | 70 | 10 | 4.99 |
| 20 | 50 | 30 | 4.90 |
| Standard powder | | | 3.90 |

### Example 2: Processing of the inventive powder mixture

In an EOS-M290 machine, test specimen of the inventive and conventional 316 L steel powders were prepared using varying volume rates (VR). Of these test bodies, cross-cuts were prepared and evaluated by image analysis for defects.

The results of these tests are given in the below table 2:

| VR [mm³/s] | Comp. 316 Powder | | Inventive 316 Powder | % defects |
|---|---|---|---|---|
| | % defects | Total defects | % defects | Total defects |
| 6.8 | 0.021 | 499 | 0.007 | 204 |
| 7.8 | 0.060 | 1257 | 0.023 | 758 |
| 8.0 | 0.024 | 602 | 0.012 | 747 |
| 8.2 | 0.078 | 2220 | 0.031 | 1110 |
| 8.4 | 0.063 | 1199 | 0.024 | 849 |
| 9.0 | 0.142 | 2028 | 0.077 | 1643 |
| 9.2 | 0.075 | 1538 | 0.032 | 733 |
| 9.5 | 0.314 | 3859 | 0.208 | 3109 |
| 9.6 | 0.050 | 1289 | 0.020 | 836 |
| 10.1 | 0.399 | 3087 | 0.265 | 2104 |
| average | 0.123 | 1758 | 0.070 | 1209 |

The above table shows, that by using the inventive powder mixture, both the percentage and the total number of defects could be reduced by an average of about 75 % (% defects) and 50% (total defects).

### Example 3: Reusability of the inventive powder mixtures

The particle size distribution and the apparent density of powder mixtures of 316 L steel, which were left over from the production of a test specimen by processing in an EOS M290 machine was investigated. The respective D10, D50 and D90 particle sized were determined according to ISO 13322:2020 after one, five and nine times of processing of the respective material, which was not molten. The results of these tests are given in the below table 3:

| | After 1x processing | After 5x processing | After 9x processing |
|---|---|---|---|
| D10 | 14.1 | 17.5 | 17.8 |
| D50 | 39.2 | 40.7 | 40.7 |
| D90 | 57.7 | 60.3 | 61.6 |
| Apparent density | 4.7 | 4.7 | 4.7 |

As is apparent form the above table, the respective D10, D50 and D90 underly very little change when the particle powders are processed so that they can be reused without further conditioning.

## Claims

1. Powder mixture for use in an additive manufacturing process, wherein the powder mixture comprises a particle fraction A with a median particle size α, a particle fraction B with a median particle size β, which is smaller than the median particle size α, and a particle fraction C with a median particle size γ, which is larger than the median particle size α, wherein the particle size of the particle fractions B, A and C relate to each other as 0.2 to 0.5 / 1 / 1.3 to 2.

2. Powder mixture according to claim 1, wherein the median particle size of the particle fractions B, A and C relate to each other as 0.3 to 0.4 / 1 / 1.5 to 1.8.

3. Powder mixture according to claim 1 or 2, wherein the particle fractions A, B and C have essentially the same composition.

4. Powder mixture according any one of claims 1 to 3, wherein the powder mixture has a relative density of at least 50%, and preferably at least 54% and/or less than 63%.

5. Powder mixture according to any one of the preceding claims, wherein the powder mixture has an apparent density of from 4.2 to 5.0 g/cm³, preferably at least 4.4 g/cm³ and/or 4.9 g/cm³ or less and more preferably at least 4.6 g/cm³ and/or 4.85 g/cm³ or less.

6. Powder mixture according to any one of the preceding claims, wherein the particle fraction A has a particle size D50 in the range of 30 µm to 60 µm and preferably at least 35 µm and/or 52 µm or less and more preferably at least 38 µm and/or 48 µm or less.

7. Powder mixture according to any one of the preceding claims, wherein the particle fraction B has a particle size D50 in the range of 8 µm to 25 µm and preferably at least 10 µm and/or 20 µm or less and more preferably at least 12 µm and/or 17 µm or less.

8. Powder mixture according to any one of the preceding claims, wherein the particle fraction C has a particle size D50 in the range of 50 µm to 100 µm and preferably at least 58 µm and/or 90 µm or less and more preferably at least 62 µm and/or 80 µm or less.

9. Powder mixture according to any one of the preceding claims, wherein the particle fraction A has a distribution width as indicated by the span of from 0.4 to 1 and preferably from 0.55 to 0.8, and/or the particle fraction B has a distribution width as indicated by the span of from 0.8 to 1.7 and preferably from 1.0 to 1.4 and/or the particle fraction C has a distribution width as indicated by the span of from 0.3 to 0.6 and preferably from 0.35 to 0.5.

10. Powder mixture according to any one of the preceding claims, wherein the particle fraction A and/or the particle fraction B and/or particle fraction C has a sphericity of at least 0.9, in particular at least 0.93, preferably wherein all particle fractions have a sphericity of at least 0.9.

11. Powder mixture according to any one of the preceding claims, wherein the particle fraction A accounts for 10 to 20 parts by weight, the particle fraction B accounts for 50 to 70 parts by weight and the particle fraction C accounts for 10 to 40 parts by weight, based on the total weight of the mixture.

12. Powder mixture according to any one of the preceding claims, wherein the particles in the fractions A, B and C are steel, nickel or aluminium alloy particles, preferably steel particles.

13. Method for the preparation of a powder mixture, preferably a powder mixture as claimed in any one of claims 1 to 12, comprising providing a particle fraction A with a median particle size α, a particle fraction B with a median particle size β, which is smaller than the median particle size α, and a particle fraction C with a median particle size γ, which is larger than the median particle size α, wherein the particle size of the particle fractions B, A and C relate to each other as 0.2 to 0.5: 1: 1.3 to 2, and mixing the particle fractions A, B and C to provide a powder mixture.

14. Method for the manufacture of a three-dimensional object, comprising providing a powder mixture as defined in any one of claims 1 to 12, preferably a powder mixture prepared according to the method of claim 13, and preparing the object by applying the mixture layer on layer and selectively consolidating the mixture, in particular by application of electromagnetic radiation, at positions in each layer, which correspond to the cross section of the object in this layer, wherein the positions are scanned in at least one interaction zone, in particular in a radiation interaction zone of an energy beam bundle.

15. Method according to claim 14, wherein the individual layers are applied at a thickness of 10 µm or more, preferably 20 µm or more and more preferably 30 µm or more and/or 100 µm or less, preferably 80 µm or less and more preferably 60 µm or less.

16. Three-dimensional object prepared according to the method of claims 14 or 15.

17. Use of powder mixture according to any one of claims 1 to 12 for reducing the number of defects in a three-dimensional object, which is prepared from the powder mixture by an additive manufacturing process.

18. Device for implementing a method according to claim 14 or 15, wherein the device comprises an irradiation unit emitting electromagnetic or particle irradiation, preferably a laser sintering or laser melting device (20), a process chamber (3) having an open container (5) with a container wall (6), a support (10), which is inside the process chamber (3), wherein open container (5) and support (10) are moveable against each other in vertical direction, a storage container (14) and a recoater (16), which is moveable in horizontal direction, and wherein the storage container (14) is at least partially filled with a powder mixture according to any one of claims 1 to 12.
